# EUROPEAN PATENT APPLICATION

(11) **EP 1 970 836 A2**
(43) Date of publication of application: **17.09.2008**
(21) Application number: 08101403.7
(22) Date of filing: 08.02.2008
(51) Int. Cl.: G06F 21/24

(54) **Method and system for providing an electronic signature**

(30) Priority: 14.03.2007 NL 2000536
(71) Applicant: DigiNotar B.V., 1942 LJ Beverwijk (NL)
(72) Inventor: De Bos, Anthonie, 2421 AZ, Nieuwkoop (NL); Batenburg, Theodorus Herrebertus Gerardus Maria, 1015 EB, Amsterdam (NL)
(74) Representative: van Looijengoed, Ferry Antoin Theodorus

(57) **Abstract**

The invention relates to a method and a system for providing a document with an electronic signature in a system comprising a trusted party server, a computer device and a signature device. The trusted party server displays a document on a screen of the computer device and receives an electronic signature produced by means of the signature device. The trusted party server provides the document sent with the received electronic signature.

## Description

### FIELD OF THE INVENTION

The invention relates to the field of electronic signatures. More in particular, the invention relates to a method and a system for providing electronic documents with an electronic signature.

### BACKGROUND OF THE INVENTION

In present-day life documents, such as declarations, agreements, documents issued or provided by the authorities or other documents are increasingly electronically available. Consequently, there is also a wish to be able to provide such documents with an electronic signature.

In 1999 the European Commission issued Directive 99/93/EC, on the basis of which the member states of the European Union amended their national laws in order to achieve that an electronic signature will be regarded as legally valid. In the Netherlands said Directive resulted in the inclusion of a regulation in Articles 15a-15c of Book 3 of the Civil Code.

A requirement that is made of electronic signatures is that it must be possible to identify the person who signed the document and that it must be linked to the electronic file of the document in such a manner that any subsequent alteration of the data can be traced, all this in a reliable manner.

It has been found that up to now electronic signatures are used on a small scale. Frequently, electronically available documents are printed and provided with a conventional signature. On the one hand this is caused by the fact that parties do not have the infrastructure to provide documents with electronic signatures in accordance with the legal requirements made thereof, and on the other hand by the fact that parties are still suspicious as regards possibilities of data manipulation, in spite of the legal safeguards. The possibility to manipulate data might for example comprise the repeated use of the electronic signature for different documents, or the changing of the document in comparison with the document for which the electronic signature was originally provided.

### SUMMARY OF THE INVENTION

It is an object of the invention to provide a method and a system for providing documents with an electronic signature which overcomes the above drawbacks and which complies with the technical, legal requirements made thereof.

In order to accomplish that object, a method and a system as defined in claims 1 and 11, respectively, are proposed.

The fact that the document is shown from a server arranged outside the scope of authority of the provider of the document (the third party server) inspires confidence with the signer(s) that the document cannot be subsequently manipulated. Also the link between the file of the document and the electronic signature is created outside the parties' scope of authority, so that manipulation is not possible in that case, either. The invention thus creates a possibility, using simple infrastructure, to realise an electronically signed document that complies with the legal requirements made thereof.

The term "electronic signature" as used herein is in particular understood to mean a written expression, signature, text or one or more biometric characteristics of a signer, which is suitable for authenticating documents.

The embodiment of the invention as defined in claim 2 provides a visually perceptible authentication sign that the document and the electronic signature are both authentic.

The embodiment of the invention as defined in claim 3 is suitable for providing parties to the document or third parties with an authentic electronically signed document.

The embodiment of the invention as defined in claim 4 provides a suitable manner of placing a signature on the electronically signed document by the trusted server.

The embodiment of the invention as defined in claim 5 enables parties to examine the electronically signed document for verification, without having access to said document, before providing it with an authentication sign.

The embodiments of the invention as defined in claims 6 and 7 relate to further measures to prevent manipulation of the document and/or the electronic signature.

The embodiment of the invention as defined in claim 8 provides a simple form of supplying the document to be signed and subsequently authenticating said document.

The embodiment of the invention as defined in claim 9 provides a manner of placing a signature similar to the conventional manner of placing signatures.

The embodiment of the invention as defined in claim 10 provides a possibility of adding further authenticity characteristics to the electronic signature.

The invention further relates to a trusted party server as defined in claim 12.

The invention will now be described in more detail with reference to the appended figures, which schematically show an embodiment of the invention. It will be understood that the invention is by no means limited to this embodiment.

### BRIEF DESCRIPTION OF THE FIGURES

In the figures:
Fig. 1 is a schematic view of a system for providing a document with an electronic signature according to an embodiment of the invention.
Fig. 2 is a diagram showing the steps of a method for providing a document with an electronic signature according to an embodiment of the invention.

### DETAILED DESCRIPTION OF THE FIGURES

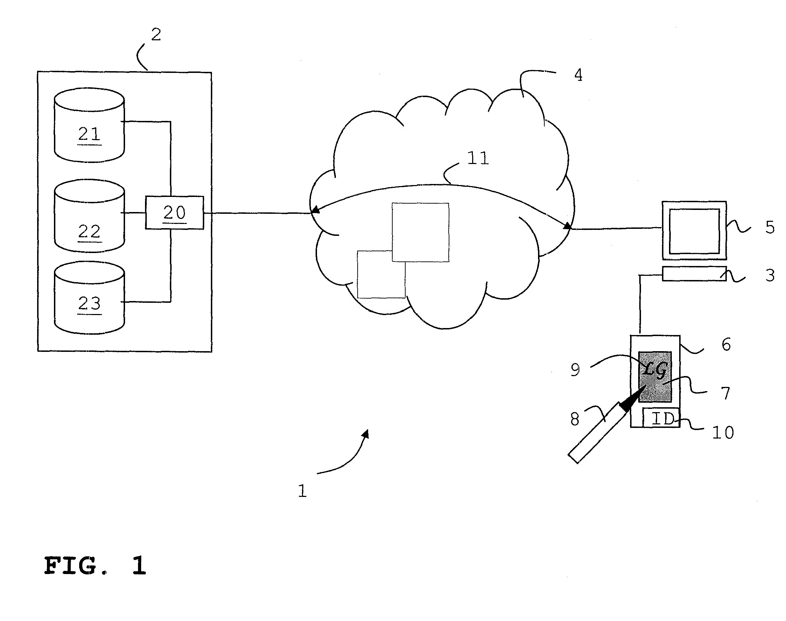

Fig. 1 is a schematic view of a system 1 for providing a document with an electronic signature according to an embodiment of the invention. The system 1 to that end comprises a trusted third party server 2, to be referred to below as "TTP server", and the computer device 3, which are arranged for communicating with each other via a network 4. The computer device 3 is capable of displaying a document on a screen 5. The system 1 also comprises a signature device 6 for producing an electronic signature.

In the illustrated embodiment, the computer device 3 and the signature device 6 are both located in a space or an environment where the parties to the document to be signed are gathered, for example a shop. In the present embodiment, the signature device 6 is communicatively coupled to the computer device 3, so that data from the signature device can be sent to the TTP server 2 via the network 4.

The computer device 3 may be a conventional personal computer, a terminal or any other device capable of communication with the TTP server 2.

In the present preferred embodiment, the signature device 6 comprises a device provided with a surface 7, on which a party's signature can be registered by means of a writing device 8, for example a suitable pen. Said signature consists of one or more symbols 9 written onto the surface 7, which can be registered and be translated into digital data that can be sent to the TTP server 2. The signature device 6 is preferably also suitable for registering the force exerted by the user of the pen 8 upon writing the symbols 9 for the electronic signature and/or the speed at which said symbols have been written. The signature device 6 comprises a memory 10, inter alia for storing identification data of the signature device 6. Alternatively, it is also possible to use identification data of the pen 8 in addition thereto or instead thereof.

The signature device 6 may for example comprise a Wacom Intuos 3 Graphics Table and Pen (www.wacom.com).

The TTP server 2 is outside the scope of authority of the parties involved in the document to be provided with an electronic signature. The TTP server 2 comprises a process server 20 for communication with the computer device 3 and the signature device 6, as well as a first database 22 comprising stored files regarding electronic documents that have not been provided with an electronic signature yet (but which have been provided with an authenticating sign (see below), a second database 22 comprising identification data of signature devices 6 and/or writing devices 8 known to the TTP server, and a third database 23 comprising electronic documents provided with an electronic signature and an authenticating sign. It will be apparent to those skilled in the art that the databases 21-23 may be combined in a single database and that said databases need not form part of the TTP server 2, but that the information from said databases 21-23 can be made available at the TTP server 2 in a different manner.

The TTP server 2, the computer device 3 and the signature device 6 can communicate with each other via an uninterrupted, secured connection, which is schematically indicated at 11 in Fig. 1. The connection may for example be a VPN connection over the Internet 4.

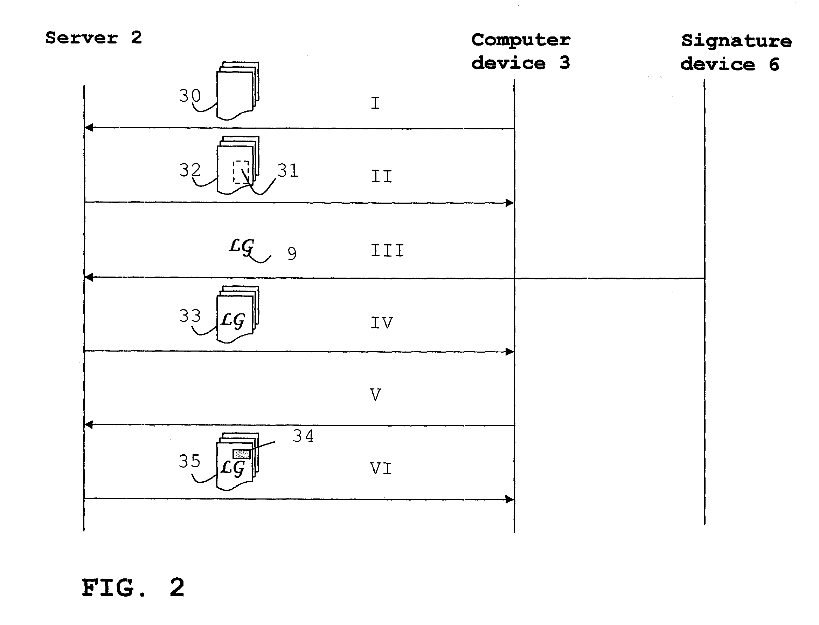

An example of the operation of the system one of Fig. 1 will now be explained by means of an example as shown in Fig. 2.

The author of an electronic document 30, for example a PDF or a TIF file, sends said document 3 to the TTP server 2, as shown in step I. The PDF or TIF file can be sent to the TTP server 2 from the computer device 3 or another computer device, for example. The TTP server 2 receives the document 30, provides it with an authenticating sign 31 and stores the document provided with the authenticating sign in the database 21 as document 32. The authenticating sign is so arranged and linked to the document 32 that any alteration of the document will be recognisable. The authenticating sign 31 may be a PKI (Public Key Infrastructure) signature, for example.

When the document 32 is to be signed, a secured connection 11 is set up between the computer device 3 and the TTP server 2, and in step II the document 32 is displayed on the screen 5 present at the location of the computer device 3 via the secured connection 11 and the computer device 3.

When the signer agrees to the content of the document, he places a signature on the surface 7 of the signature device 6 by means of the pen 8. The signature device 6 converts the signature into digital information and communicates said information, as well as the identification data from the memory 10 and/or the identification data of the pen 8, to the TTP server 2 via the secured connection 11 over the network 4 in step III. The TTP server 2 verifies whether the signature device 6 and/or the pen 8 are known to the TTP server 2 by consulting the database 22. The information relating to the signature may also comprise data regarding the pressure of the pen 8, the pressure changes and/or the speed of movement of the pen 8 over the surface 7 during the placement of the electronic signature.

If the signature device 6 is known, the processor 20 will retrieve the document 32 from the database 21 and provide it with the electronic signature received from the signature device 6. This takes place by converting the received digital information into an image and placing the image on the document, thereby linking the electronic signature to the document and giving it legal force. In step IV the file with the document 33 thus electronically signed is sent to the computer device 3 via the secured connection 11 over the network 4, at least it is displayed on the screen 5 at the location of the computer device 3 for verification. The document is only displayed on the screen 5 from the secure environment of the TTP server, and cannot be edited at the location of the computer device 3.

If the signature device 6 is not known to the TTP server 2, a message containing further information and/or instructions is sent to the computer device 3 in step IV.

In step V, the TTP server 2 is informed from the location of the computer device 3, via the secured connection 11, that parties agree to the electronically signed document. The TTP server 2 now provides the document 33 with an authenticating sign 34 and stores the document provided with an electronic signature and an authenticating sign in the database 23 as document 35. The additional information (pressure and speed of the pen 8) concerning the electronic signature is likewise stored. The authenticating sign 34 may be a PKI signature, for example. The document 33 is thus provided with an authenticating sign (a first PKI signature), an electronic signature 9 as received from the signature device 6 and an authenticating sign (a second PKI signature).

Finally, the file concerning document 35 is sent to parties in step VI, for example, but not necessarily, to the computer device 3. Said sending may also take place at a later point in time, possibly via e-mail or another form of communication or electronic data carrier.

The invention is generally characterised by the fact that all critical processes, i.e. the processes where manipulation of the document and/or the electronic signature might be possible, take place under the control of the TTP server 2.

## Claims

1. A method for providing a document with an electronic signature in a system comprising a trusted party server, a computer device comprising a display and being arranged for communication with the trusted party server via a network, and a signature device for producing the electronic signature and being configured for communication with the trusted party server, wherein the trusted party server:
- displays the document to be signed on the screen via the network and the computer device;
- receives an electronic signature produced by means of the signature device;
- provides the document sent with the received electronic signature.

2. The method according to claim 1, wherein the trusted party server provides the document provided with the electronic signature with a, preferably visually perceptible, authenticating sign for linking the document sent and the electronic signature together.

3. The method according to claim 2, wherein the trusted party server stores and/or sends the document provided with the authenticating sign and the electronic signature.

4. The method according to claim 2 or 3, wherein the authenticating sign comprises an electronic public key infrastructure signature.

5. The method according to any one or more of the preceding claims, wherein the trusted party server sends the document provided with the electronic signature to the computer device for displaying the same on the screen.

6. The method according to claim 5, wherein the document is sent and the electronic signature is received over a continuous, secured connection via the network.

7. The method according to any one or more of the preceding claims, wherein the signature device comprises unique identification data and the trusted party server authorises the signature device on the basis of said the unique identification data.

8. The method according to any one or more of the preceding claims, comprising the steps of the third party server:
- receiving the document;
- electronically authenticating the document received.

9. The method according to any one or more of the preceding claims, wherein the signature device comprises a surface for registering pen movements, and wherein the electronic signature is made up of information concerning one or more characteristics of said pen movements.

10. The method according to claim 9, wherein the characteristics selected from the group comprising the pendrawn lines, the registered pressure with which said lines have been drawn on the surface and the speed at which said lines have been drawn on the surface.

11. A system for providing a document with an electronic signature, comprising a trusted party server, wherein the trusted party server is configured for carrying out the method is according to any one or more of the claims 1-10.

12. A trusted party server suitable for use in a system according to claim 11.
